# EUROPÄISCHE PATENTANMELDUNG

(11) **EP 1 179 378 A1**
(43) Veröffentlichungstag der Anmeldung: **13.02.2002**
(21) Anmeldenummer: 01118485.0
(22) Anmeldetag: 01.08.2001
(51) Int. Cl.: B23B 47/28

(54) **Bohrlehre**

(30) Priorität: 11.08.2000 DE 20014075 U
(71) Anmelder: Dr. Hahn GmbH & Co. KG, D-41189 Mönchengladbach (DE)
(72) Erfinder: Bögel-Pötter, Jürgen, 41849 Wassenberg (DE); Herglotz, Tibor, 52372 Kreuzau (DE); Niessen, Rainer, 47799 Krefeld (DE)
(74) Vertreter: Palgen, Peter, Dr.

(57) **Zusammenfassung**

Bohrlehre (10,10') für das Anbringen von der Befestigung der Bänder von Fenster, Türen und dergleichen dienenden Bohrungen im feststehenden Rahmen (1) und/oder Flügel (3) mit Bohrbüchsen (15,15') zur Führung des Bohrers. Damit die nötigen Bohrungen in den Wandungen der Rahmenprofile sicher und genau ausgeführt werden können, umfaßt die Bohrlehre (10,10') mindestens ein mit den Bohrbüchsen (15,15') versehenes Bandteil (11,11').

## Beschreibung

Die Erfindung bezieht sich auf eine Bohrlehre der dem Oberbegriff des Anspruch 1 entsprechenden Art.

Die heute meist aus Aluminium oder Kunststoff stranggepreßten Rahmenprofile für Türen, Fenster und dergleichen sind überwiegend als Hohlprofile ausgebildet, die ebene Vorder- und Rückseiten haben und die in den parallel zur Flügelfläche gerichteten Seitenflächen offene Profilkammern aufweisen, die zur Aufnahme von Zusatzprofilen, Beschlägen oder dergleichen dienen und von Profiltyp zu Profiltyp verschieden sein können. Gewöhnlicherweise werden die Bänder auf die ebenen Vorderseiten der Profile aufgesetzt und durch senkrecht dazu verlaufende Befestigungsschrauben mit den Profilen verbunden. Für die Befestigungsschrauben der Bänder müssen Bohrungen in die Profile eingebracht werden, deren Lage die Lage des Flügels zum feststehenden Rahmen bestimmt und daher genau sein muß. Die Bohrungen werden daher durchweg mit Hilfe von Bohrlehren erstellt, die eine Bohrplatte umfassen, die auf die Vorderseite der Profile aufgelegt wird und an den richtigen Stellen die Bohrbüchsen für die Hindurchführung und seitliche Führung des Bohrers enthält. Die Bohrlehre wird mit den in der richtigen gegenseitigen Position angeordneten Rahmenprofilen durch ein Spanneisen (Schraubzwinge) verbunden, um ein Verrutschen während des Bohrens zu vermeiden. Jedoch sind zum Beispiel aus der DE 297 12 633 U1 Bandanordnungen bekannt, bei denen die Bänder als sogenannte Rollenbänder ausgebildet sind. Die "Rollen" sind die von dem jeweiligen Scharnierbolzen durchgriffenen übereinanderliegenden Scharnierteile der Bandteile, die zylindrische Außenumfänge gleichen Durchmessers aufweisen und von denen ausgehend die Befestigungsschenkel der beiden Bandteile senkrecht zur Rahmen- bzw. Flügelebene in die Schattennut hineingreifen, die nur wenig breiter ist als die Dicke dieser Befestigungsschenkel. Die Befestigung erfolgt in dem Spalt zwischen Rahmen und Flügel ganz im Innern derselben.

Die Befestigung der Befestigungsschenkel erfolgt über eine an deren freien Ende in dem der Öffnungsseite abgewandten Bereich vorgesehenen Schraubverbindung, mittels derer der Befestigungsschenkel mit einem auf der gegenüberliegenden Seite der Wandung des dortigen Hohlprofils angeordneten, mit Gewindebohrungen versehenen Befestigungsstück zusammengezogen wird.

Die bekannten gewöhnlichen Bohrlehren, die auf die ebene Vorderseite der Profile aufgelegt werden und daher gleichfalls eine ebene Unterseite aufweisen, sind für die einander gegenüberliegenden Wandungen der Rahmenprofile im Falzbereich ungeeignet, da diese dort mehrere hervorstehende Profilstege aufweisen und somit nicht eben sind. Durch das Fehlen der flächigen Anlage ist die Festlegung der Bohrlehre an den Profilen erschwert.

Ausgehend von diesem Problem ist es Aufgabe der Erfindung, eine Bohrlehre bereitzustellen, mit der die nötigen Bohrungen in den Wandungen der Rahmenprofile sicher und genau ausgeführt werden können und die außerdem einfach herzustellen ist.

Diese Aufgabe wird durch die in Anspruch 1 wiedergegebene Erfindung gelöst.

Dadurch, daß die Bohrlehre mindestens ein mit den Bohrbüchsen versehenes Bandteil umfaßt, ist die Bohrlehre an den Querschnitt der sich im Falzbereich zwischen den Rahmenprofilen gegenüberstehenden Seitenwandungen des jeweiligen Rahmen- bzw. Flügelprofils sowie an das entsprechende, später anzubringende Band genau angepaßt und es ist möglich, das Bandteil entlang der Führung in deren Längsrichtung direkt auf dem Profil liegend in die gewünschte Position zu bringen. Die seitliche Ausrichtung der Bohrlehre ergibt sich dabei aufgrund der Gestalt des Bandteils von alleine. Daher ist eine genaue Ausrichtung der Bohrlehre möglich. Es wird bei der Erfindung gewissermaßen ein Bandteil, welches im allgemeinen ein stranggepreßter Profilabschnitt ist, zur Bohrlehre umfunktioniert.

Die erfindungsgemäße Bohrlehre ist in einfacher Weise schnell und preiswert herstellbar. Es muß nicht für jedes Profil eine neue Bohrlehre entwickelt werden, sondern es kann ein aus der Fertigung stammendes Bandteil für das jeweilige Profil zur Bohrlehre umgearbeitet werden, indem an den Stellen der Befestigungsbohrungen Bohrbuchsen eingepreßt werden.

Obwohl die Erfindung ihren Ausgang von Bändern mit in den Falzbereich hineingreifenden Befestigungsteilen genommen hat und in erster Linie dafür vorgesehen ist, ist sie nicht darauf beschränkt, sondern kann auch bei flach auf den ebenen Profilvorderseiten aufliegenden Bändern angewandt werden.

Die Bohrlehre kann gemäß Anspruch 2 mindestens zwei Bohrbüchsen tragende Bandteile umfassen.

Das Bandteil kann entlang einer parallel zur Längsrichtung des Profils des Rahmens und des Flügels verlaufenden Geradführung in deren Längsrichtung verstellbar sein (Anspruch 3), die meist stangenförmig ist (Anspruch 4) und die Bandbolzenausnehmung des als Bohrlehre dienenden Bandteils spielfrei durchgreift (Anspruch 5).

Das Bandteil kann zur Fixierung der Einstellung durch geeignete Mittel gegenüber der Führung feststellbar sein (Anspruch 6), wobei die geeigneten Mittel senkrecht zur Führungsrichtung wirkende Klemmschrauben umfassen können (Anspruch 7).

Vorteilhafterweise liegen bei in Betriebsstellung befindlicher Bohrlehre die Bohrbüchsen mit ihrer Stirnseite an der jeweiligen zu durchbohrenden Wand an (Anspruch 8). Diese Maßnahme verhindert, daß beim Bohren gebildete Späne sich zwischen der jeweiligen Bohrbuchse und der eloxierten Oberfläche des Profils schieben und die eloxierte Schicht zerstören, welches in nachteiliger Weise eine Korrosion begünstigen könnte. Zusätzlich wird eine gerade Bohrungsführung sichergestellt.

Zur Positionierung des Bandteils relativ zum Rahmen bzw. Flügel kann an den jeweiligen Enden der Führung ein Anschlag vorgesehen sein (Anspruch 9).

Bei einem bevorzugten Ausführungsbeispiel ist das Bandteil der Bohrlehre ein solches mit einem sich im wesentlichen senkrecht zur Rahmenebene in den Falzbereich zwischen feststehendem Rahmen und Flügel hinein erstrekkendem Befestigungsteil (Anspruch 10).

In den Ansprüchen 11 und 12 sind ein Verfahren zum Anbringen der Bohrungen bzw. die Verwendung des Bandteils als Bohrlehre wiedergegeben, worin sich die Erfindung ebenfalls verkörpert.

Weitere Merkmale, Einzelheiten und Vorteile der vorliegenden Erfindung ergeben sich aus der nachfolgenden Beschreibung der Zeichnung. In der Zeichnung sind Ausführungsbeispiele der Erfindung dargestellt.
- Fig. 1: zeigt eine perspektivische Ansicht einer an einem Rahmenprofil festgeklemmten Bohrlehre;
- Fig. 2a und 2b: zeigen jeweils in einer Draufsicht eine erfindungsgemäße Bohrlehre an einem Rahmen- bzw. Flügelprofil;
- Fig. 3a und 3b: zeigen den Fig. 2a und b entsprechende Ansichten in Richtung der Pfeile A bzw. B;
- Fig. 4a und 4b: zeigen entsprechende Querschnitte entlang der Linien Y-Y aus Fig. 2a und X-X aus Fig. 2b;

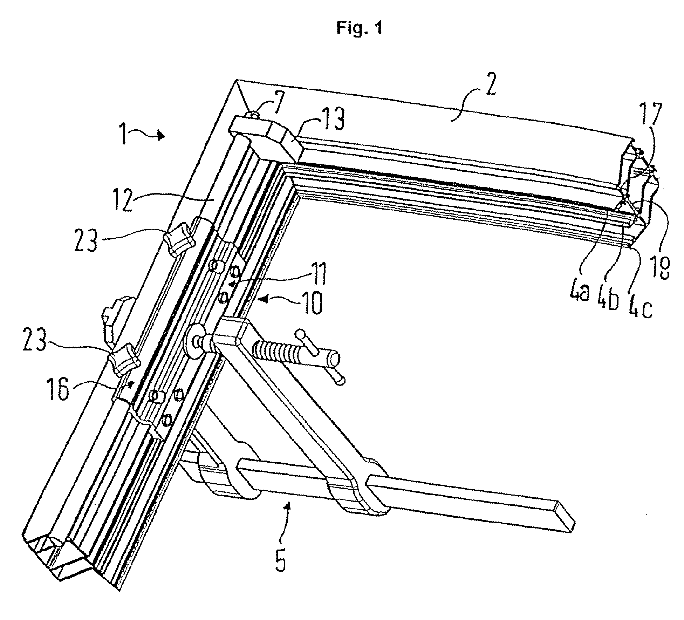

In Fig. 1 ist die als Ganzes mit 10 bezeichnete Bohrlehre mit einer Schraubzwinge 5 an das Hohlprofil 2 eines nur im Ausschnitt dargestellten feststehenden Rahmens 1 festgeklemmt. Das Hohlprofil 2 weist nach innen hervorstehende Profilstege 4a, 4b und 4c auf. Das aus einem Band hergestellte Bandteil 11 der Bohrlehre 10 liegt auf der die Stege 4a, 4b, 4c aufweisenden Innenseite auf und ist über Klemmschrauben 14, welche über Drehknöpfe 23 bedient werden, an einer Führungsstange 12 fixiert. Diese Fixierung dient zur Einstellung der Lage bezüglich des Anschlags 13, welcher über eine Mutter 7 an einem Ende der Führungsstange 12 gehalten wird und in der Ecke des Rahmens 1 anliegt. Die Schraubzwinge 5 dient dazu, das Bandteil 11 fest gemäß Fig. 1 von rechts nach links gegen das Hohlprofil 12 zu drücken, damit es sich während des Bohrvorgangs nicht abhebt.

In der weiteren Beschreibung beziehen sich die mit "A" gekennzeichneten Figuren auf das Hohlprofil 2 des Rahmens 1, wohingegen sich die mit "B" gekennzeichneten Figuren auf einen Flügel 3 mit einem entsprechenden Hohlprofil 9 beziehen. Für die Elemente gleicher Funktion des Flügels 3 werden die gleichen Bezugszeichen mit dem Zusatz " ' " verwendet.

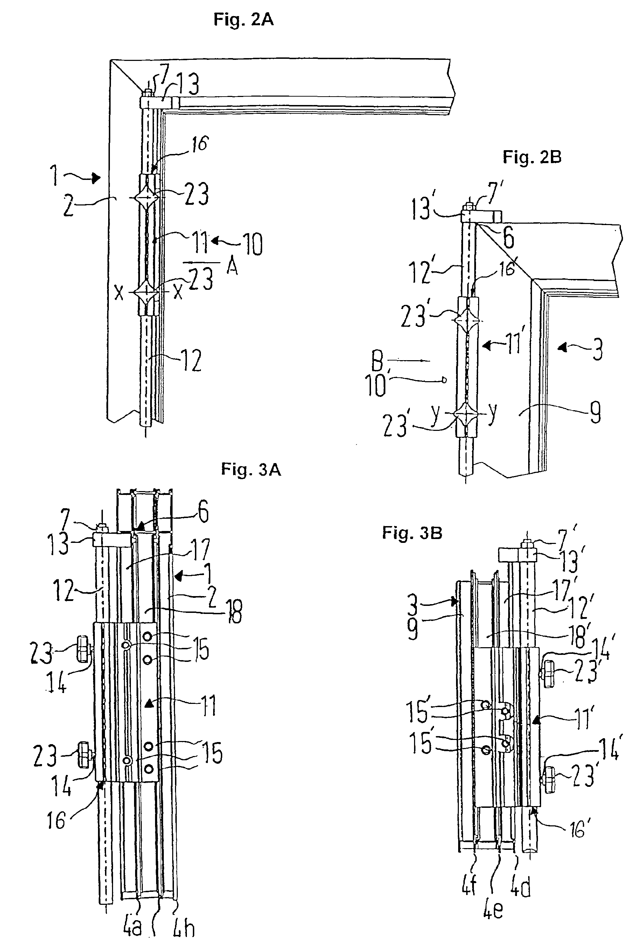

In den Fig. 2A und 2B liegt die Bohrlehre 10, 10' an dem jeweiligen Rahmen 1, 3 an dessen Hohlprofilen 2 bzw. 9 an. Die Führungsstange 12, 12' erstreckt sich parallel zu dem jeweiligen Hohlprofil, an welchem später die Bänder über die entsprechenden Bohrungen befestigt werden sollen. Die Bohrlehre wird über den Anschlag 13 an dem Rahmen 1 in der von dessen Hohlprofilen 2 gebildeten inneren Ecke angelegt und legt die Führungsstange 12 in ihrer Längsrichtung an dem Rahmen 1 fest. Im Gegensatz dazu wird bei dem Flügel 3 der Anschlag 13' auf der äußeren Seite der von den Hohlprofilen 9 gebildeten Ecke 6 angesetzt. Die Position der Führungsstange 12' in ihrer Längsrichtung wird dadurch in einer definierten Lage festgelegt.

Das Bandteil 11, 11' kann nun entlang der im Querschnitt kreisrunden Führungsstange 12, 12' bis zur gewünschten Position geschoben und dort durch Festziehen der Klemmschrauben 14, 14' fixiert werden. Die Klemmschrauben 14, 14' können manuell über Drehknöpfe 23 oder mittels eines entsprechenden Werkzeugs angezogen werden. Die Führungsstange 12, 12' durchgreift die eigentlich für den Bandbolzen vorgesehene, zylindrische Bandbolzenausnehmung 16, 16' mit Schiebesitz, aber ohne wesentliches radiales Spiel, d.h. sie ist der Bandbolzenausnehmung im Durchmesser angepaßt.

Wie aus den Fig. 3A und 3B hervorgeht, liegt dabei das Bandteil 11, 11' parallel zu den zu durchbohrenden Wandungen 17, 18 bzw. 17', 18' auf dem jeweiligen Hohlprofil 2 bzw. 9 auf. In die Bandteile 11 bzw. 11' ist jeweils eine der Bohrungen für die Bänder entsprechende Zahl von Bohrbüchsen 15, 15' eingelassen. Dadurch wird das ansonsten aus der Serie entnommene Bandteil für die Verwendung nach Art einer Bohrplatte in einer Bohrlehre hergerichtet.

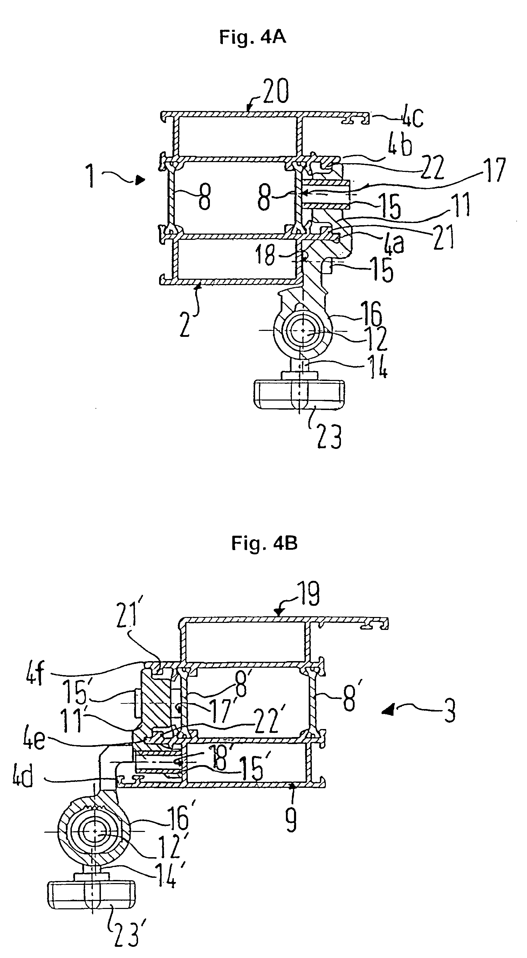

Die Bohrbüchsen 15, 15' durchgreifen das Bandteil 11, 11' und weisen dabei eine solche Länge auf, daß sie bei in Betriebsstellung befindlicher Bohrlehre mit ihrer Stirnseite an der jeweiligen zu durchbohrenden Wand (17,18, 17', 18') anliegen (Fig. 4A und 4B). Dadurch wird verhindert, daß während des Bohrens auftretende Späne sich herausdrücken und die eloxierte Oberfläche des Rahmens beschädigen, was zu verstärkter Korrosion führen kann.

Wie aus den Fig. 4A und 4B hervorgeht, sind die Hohlprofile 2 bzw. 9 aus Wärmeisolationsgründen über Kunststoffstege 8, 8' mit den Hohlprofilen 20, 19 der auf der Wetterseite gelegenen Teile des feststehenden Rahmens 1 und des Flügels 3 verbunden. Dabei bilden die Profile 2, 20 und 9, 19 an den einander zugewandten Innenseiten eine Mehrzahl von Profilstegen 4a, b, c bzw. 4d, e, f aus, zwischen denen die zu durchbohrenden Wände 17, 18 liegen.

Damit eine exakte Positionierung der Bohrungen in den Hohlprofilen vorgenommen werden kann, muß sich das Bandteil 11, 11' um diese Stege herum an das jeweilige Profil anschmiegen.

Dazu erstreckt sich das Bandteil 11 für das Hohlprofil 2 des Rahmens 1 von der zylinderförmigen Bandbolzenausnehmung 16, welche die entsprechende Führungsstange 12 aufnimmt, parallel zur Wandung 18, um dann durch zwei 90°-Knicke den Steg 4a zu umgreifen und sich dann wiederum parallel zu der zwischen den beiden Stegen 4a und 4b befindenden Wandung 17 zu erstrecken. Dabei hat der zwischen den beiden Stegen 4b und 4a liegende Bereich des Bandteils 11 eine gedrungene T-förmige Gestalt, so daß er sich an den entsprechenden Vorsprüngen 21, 22 vorbei in den Bereich zwischen den Stegen 4a und 4b hinein erstreckt. Somit kann das Bandteil 11 nur schlittenartig entlang der Stege 4a und 4b bewegt werden und nicht quer zu diesen. Die entsprechende Fixierung in Längsrichtung der Stege erfolgt wie oben schon erwähnt mittels der Klemmschrauben 14. Dies ermöglicht insgesamt eine hervorragende Ausrichtung und Sicherheit gegen ungewolltes Verrutschen des Bandteils 11 bzw. der Bohrlehre 10.

Entsprechendes gilt für das in Fig. 4B dargestellte Bandteil 11' des Flügels 3. Hier ist jedoch die Gestalt des Bandteils 11' dem umgekehrten Verlauf der Stege 4d, e, f der Hohlprofile angepaßt. Das Bandteil 11' erstreckt sich also in diesem Fall zunächst von der Bandbolzenausnehmung 16', welche von der Führungsstange 12' durchgriffen ist, um den Steg 4d herum, um dann in den Bereich zwischen den Stegen 4d und 4e hineinzugreifen und in einem gewissen kurzen Bereich parallel zu der zu durchbohrenden Wandung 18' zu verlaufen. Danach umgreift das Bandteil 11', ähnlich wie im obigen Fall, den Steg 4e mittels zweier 90°-Abwinklungen und endet wiederum in einem gedrungenen T-förmigen Bereich, welcher sich an den Vorsprüngen 21' bzw. 22' der Stege 4e bzw. 4f nach innen zwischen die Stege 4e und 4f erstreckt. Somit ist auch in diesem Fall das Bandteil gegen seitliches Verrutschen gesichert und kann nur entlang der Führungsstange 12' in Längsrichtung verschoben werden.

Wie besonders in Fig. 4A an der Wandung 17 und in Fig. 4B an der Wandung 17 zu sehen ist, liegt das jeweilige Bandteil 11 bzw. 11' nicht unmittelbar an der jeweiligen Wandung 17, 17' an. Der Abstand wird durch die Bohrbüchsen 15, 15' überbrückt, die aus den Bandteilen 11, 11' bis zur Anlage ihrer Stirnseite an den Außenseiten der Wandungen 17, 17' vorstehen, so daß die Späne nicht austreten können, sondern in den Nuten des Bohrers weggefördert werden.

Die Bohrlehre 10 wird dadurch hergestellt, daß ein Bandteil, welches dem jeweiligen Band für den Rahmen 1 bzw. dem Flügel 3 entspricht, durch Einsetzen der Bohrbüchsen 15 bzw. 15', durch Hinzufügen der Führungsstange 12, 12' anstelle des Bandbolzens und Anbringen der Klemmschrauben 14, 14' umgearbeitet wird.

### Bezugszeichenliste

- 1: Rahmen
- 2: Hohlprofil
- 3: Flügel
- 4a,b,c,d,e,f: Steg
- 5: Zwinge
- 6: Eckwinkel
- 7: Mutter
- 8, 8': Isolierende Kunststoffstege
- 9: Hohlprofil
- 10, 10': Bohrlehre
- 11, 11': Bandteil
- 12, 12': Führungsstange
- 13, 13': Anschlag
- 14, 14': Klemmschraube
- 15, 15': Bohrbuchse
- 16, 16': Bandbolzenausnehmung
- 17, 17': Wand
- 18, 18': Wand
- 19: Hohlprofil
- 20: Hohlprofil
- 21,21': Vorsprung
- 22, 22': Vorsprung
- 23, 23': Drehknopf
- A, B: Pfeil
- X, Y: Schnittlinie

## Patentansprüche

1. Bohrlehre (10,10') für das Anbringen von der Befestigung der Bänder von Fenster, Türen und dergleichen dienenden Bohrungen im feststehenden Rahmen (1) und / oder Flügel (3) mit Bohrbüchsen (15, 15') zur Führung des Bohrers,
**dadurch gekennzeichnet,**
**daß** die Bohrlehre (10,10') mindestens ein mit den Bohrbüchsen (15, 15') versehenes Bandteil (11, 11') umfaßt.

2. Bohrlehre nach Anspruch 1, **dadurch gekennzeichnet, daß** die Bohrlehre mindestens zwei die Bohrbüchsen (15, 15') tragende Bandteile (11, 11') in einem dem späteren Abstand der Bänder entsprechenden Abstand umfaßt.

3. Bohrlehre nach Anspruch 1 oder 2, **dadurch gekennzeichnet, daß** die Bohrlehre (10,10') eine parallel zur Längsrichtung des Profils des Rahmens (1) und des Flügels (3) verlaufende Geradführung (12, 12') für das Bandteil (11, 11') umfaßt.

4. Bohrlehre nach Anspruch 3, **dadurch gekennzeichnet, daß** die Führung (12, 12') als Stange ausgebildet ist.

5. Bohrlehre nach Anspruch 4, **dadurch gekennzeichnet, daß** die Stange die Bandbolzenausnehmung (16, 16') des als Bohrlehre dienenden Bandteils (11, 11') spielfrei durchgreift.

6. Bohrlehre nach einem der Ansprüche 1 bis 5, **dadurch gekennzeichnet, daß** das Bandteil (11, 11') an der Führung (12, 12') zur Fixierung der Einstellung durch geeignete Mittel (14, 14') feststellbar ist.

7. Bohrlehre nach Anspruch 6, **dadurch gekennzeichnet, daß** die geeigneten Mittel senkrecht zur Führungsrichtung wirkende Klemmschrauben (14, 14') umfassen.

8. Bohrlehre nach einem der Ansprüche 1 bis 7, **dadurch gekennzeichnet, daß** bei in Betriebsstellung befindlicher Bohrlehre die Bohrbüchsen (15, 15') mit ihrer Stirnseite an der jeweiligen zu durchbohrenden Wand (17,18, 17', 18') anliegen.

9. Bohrlehre nach einem der Ansprüche 1 bis 8 , **dadurch gekennzeichnet, daß** an dem jeweiligen Ende der Führung (12, 12') ein Längsanschlag (13, 13') vorhanden ist.

10. Bohrlehre nach einem der Ansprüche 1 bis 8 , **dadurch gekennzeichnet, daß** das Bandteil (11, 11') ein solches mit einem sich im wesentlichen senkrecht zur Rahmenebene in den Falzbereich zwischen feststehendem Rahmen (1) und Flügel (3) hinein erstreckendem Befestigungsteil ist.

11. Verfahren zum Anbringen der Befestigung der Bänder von Fenster, Türen und dergleichen dienenden Bohrungen im feststehenden Rahmen (2) und im Flügel (3) bei welchem die Bohrungen mit Hilfe einer Bohrbüchsen (15, 15') tragenden Bohrlehre (10, 10') gebohrt werden,
**dadurch gekennzeichnet,**
**dass** die Bohrbüchse (15, 15') in ein Bandteil (11, 11') eingebracht werden, welches mit dem entsprechenden Bandteil des später zu befestigenden Bandes übereinstimmt und als Bohrlehre (10, 10') dient.

12. Die Verwendung eines an den Stellen der Befestigungslochungen Bohrbüchsen (15, 15') aufweisenden Bandteils (11, 11') eines Bandes für Türen, Fenster und dergleichen als Bohrlehre (10, 10') zum Anbringen der der Befestigung dienenden Bohrungen im feststehenden Rahmen (1) und im Flügel (3).
